# EUROPÄISCHE PATENTANMELDUNG

(11) **EP 1 493 799 A1**
(43) Veröffentlichungstag der Anmeldung: **05.01.2005**
(21) Anmeldenummer: 03015151.8
(22) Anmeldetag: 04.07.2003
(51) Int. Cl.: C10J 3/00, C10J 3/10

(54) **Flashdampf-Vergasung für Biomasse**

(71) Anmelder: von Görtz & Finger Technische Entwicklungs Ges.m.b.H., 36111 Schlitz (DE)
(72) Erfinder: Finger, Ulrich, 87647 Oberthingau (DE); Graf von Schlitz, Rüdiger, 36110 Schlitz (DE)

(57) **Zusammenfassung**

Das in der Erfindung genannte Verfahren betrifft eine Vorrichtung zur Vergasung von Biomasse in dem die Prozesswärme ausserhalb der Pyrolyse erzeugt und durch Strahlungswärme übertragen wird. Mit den noch heissen Abgasen wird unter Druck überhitzter Dampf erzeugt und der Pyrolyse zugeführt. Die nicht ganz verbrannten Biomasseteilchen werden ausgesiebt, gekühlt und als Reinigungs- und Kühlmaterial für das Synthesegas verwendet.

## Beschreibung

Bei bekannten Vergasungsverfahren wird die Prozesswärme innerhalb des Vergasers durch Verbrennen eines Teiles des Materials erzeugt.
Hierzu wird als Vergasungsmittel Luft verwendet. Da Luft einen Stickstoffanteil von fast 80% besitzt und Stickstoff keine Reaktion bei der Vergasung eingeht, bleibt dieser hohe Stickstoffanteil auch im Synthesegas.

Messungen haben ergeben, dass der Volumenanteil von Stickstoff im Synthesegas stets bei ca. 50 % liegt.

Um den Heizwert von Synthesegas zu verbessern sind zweistufige Verfahren bekannt, bei denen die Prozesswärme extern erzeugt wird und mit Hilfe von Wärmeträgern (Stahlkugeln, Basaltsteinen, Asche usw.) in den Vergasungsreaktor transportiert wird.
Als Vergasungsmittel wird bei diesen Verfahren Dampf verwendet, der sich in H₂ und O₂ bei hohen Temperaturen aufspaltet. Dadurch ist es möglich ein Synthesegas zu erzeugen, das nur einen geringen Stickstoffanteil von wenigen Volumenprozenten aufweist.

Die Erfindung beschreibt ein Verfahren, bei dem ebenfalls die Prozesswärme extern erzeugt wird, jedoch erfolgt der Wärmetransport durch Wärmestrahlung, da sich der Pyrolyse - Reaktor innerhalb der Verbrennungszone befindet.

Als Vergasungsmittel wird Dampf verwendet, der in einem Dampferzeuger mit Hilfe der heissen Abgase erzeugt wird. Eine Hochdruckpumpe komprimiert das zu verdampfende Wasser vor dem Eintritt in den Dampferzeuger, so dass nach dem Einspritzen in den Pyrolyse - Reaktor *Flashdampf* entsteht. Damit wird erreicht, dass im Pyrolyse - Reaktor ein Überdruck entsteht und der Vergasungsprozess schneller und intensiver abläuft.

Teil der Erfindung ist auch das Reinigungs- und Abkühlungsverfahren des Synthesegases. Die Restkohle aus der Verbrennung wird ausgesiebt, so dass die Asche abgetrennt wird. Die grösseren Partikel werden in einer Kühlschnecke abgekühlt und dem Koksbehälter zugeführt. Dieser Koksbehälter und die Kokstransportschnekke sind ebenfalls gekühlt, so dass das Synthesegas aus dem Pyrolyse- Reaktor im Gegenstromverfahren abgekühlt wird. Beim Abkühlen des Synthesegases entstehen Teere und Kondensate die vom Koks (Oberfläche 200 - 300 m²/gr.) aufgenommen werden.

Der erwärmte und mit Teeren und Kondensat belastete Koks wird der Verbrennung wieder zugeführt, da er durch die Teerbelastung einen guten Heizwert besitzt.

### Beschreibung der Anlage

Das zu vergasende Material z.B. Biomasse wie Holz, Klärschlamm, usw. wird in den Vorratsbehälter 1 aufgegeben A. Mittels einer Transportschnecke 2 wird das Material in den Pyrolyse - Reaktor 3 gefördert.

Hierin wird das Material unter Zugabe von überhitztem *Flashdampf*, der durch die heissen Abgase im Dampferzeuger 5 erzeugt wird, vergast.

Das ausgegaste Material gelangt durch eine Schleuse in die darunterliegende Verbrennung 7, wo es unter Zugabe von Luft, die durch die heissen Abgase im Lufterhitzer 6 erwärmt wird, verbrannt wird.

Die heissen Rauchgase aus der Verbrennung 7 erhitzen von aussen 4 den Pyrolyse - Reaktor 3, der zur besseren Wärmeübertragung mit Heizrippen bestückt ist. Die Abgase entweichen im oberen Teil des Wärmemantels 4 und werden anschliessend für die Flashfampfzeugung 5 und Luftvorwärmung 6 verwendet. Nach dem Austritt bei C gelangen die Abgase in einen Kamin.

Das Restmaterial und die Asche aus der Verbrennung 7, werden in einer Siebschnecke 8 voneinander getrennt, wobei die Asche bei D ausgetragen wird.

Die ausgesiebten 8 heissen Restpartikel aus der Verbrennung werden in einer Kühlschnecke 9 abgekühlt und in den Koksbehälter 12 transportiert. Der Koksbehälter 12 und die Koksschnecke 11 werden ebenfalls gekühlt.

Das Pyrolysegas aus dem Pyrolyse - Reaktor strömt in die Koksschnecke 11 und wird dort im Gegenstromverfahren gereinigt und abgekühlt; so dass es oberhalb des Koksbehälters 12 bei der Öffnung B ausströmt.

Der durch das Abkühlen des Synthesegases erwärmte und mit Teeren und Kondensat belastete Koks wird über eine Schleuse der Verbrennung zugeführt.

Das Kühlwasser aus der Kühlschnecke 9 und aus dem Koksbehälter 12 und der Koksschnecke 11 wird in einem Wärmetauscher 10 abgekühlt, so dass die Wärme für Heizzwecke wieder verwendet werden kann.

Das bei B ausströmende teerfreie und abgekühlte Synthesegas mit hohen Heizwert kann für folgende Zwecke verwendet werden:
1) Betrieb eines Blockheizkraftwerkes
2) Betrieb eines Gasbrenners
3) Betrieb einer Gasturbine
4) Umwandlung durch einen Reformer in Synthesetreibstoff
5) Abspaltung des hohen Wasserstoffvolumens für den Betrieb einer Brennzelle.

### Aufstellung der Positionen

1) Materialbehälter
2) Materialschnecke
3) Pyrolyse - Reaktor
4) Heizkammer
5) *Flashdampf-* Erhitzer
6) Luftvorwärmer
7) Verbrennungszone
8) Siebschnecke
9) Kühlschnecke
10) Kühler
11) Koks - Kühlschnecke
12) Koks - Behälter

### Zeichnung

A) Material als Biomasse
B) Kaltes, teerfreies Synthese - Gas
C) Abgas aus der Verbrennung
D) Ausgesiebte Asche

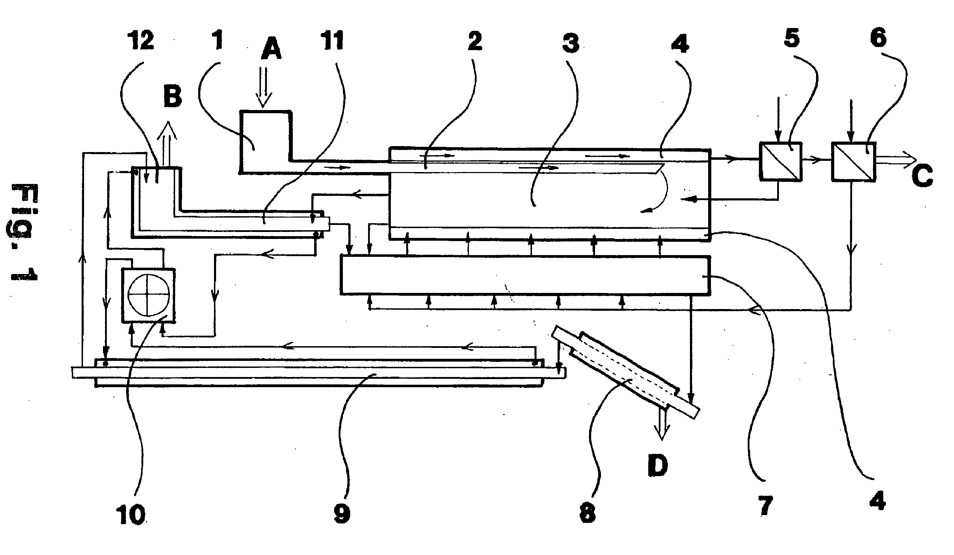

## Patentansprüche

1. Verfahren zur Erzeugung eines kalten, teerfreien Synthesegases **dadurch gekennzeichnet, dass** die Prozesswärme ausserhalb der Pyrolyse erzeugt und durch Strahlung übertragen wird.

2. Verfahren nach Anspruch 1) **dadurch gekennzeichnet, dass** für den Vergasungsprozess keine Luft sondern überhitzter Dampf verwendet wird.

3. Verfahren nach Anspruch 2) **dadurch gekennzeichnet, dass** die unverbrannten Rückstände aus der Verbrennung ausgesiebt, gekühlt und als Reinigungs- und Kühlmaterial verwendet wird.

4. Verfahren nach Anspruch 3) **dadurch gekennzeichnet, dass** das erwärmte und mit Teeren und Kondensat behaftete Reinigungsmaterial der Verbrennung wieder zugeführt wird.

5. Verfahren nach Anspruch 4) **dadurch gekennzeichnet, dass** die Kühlschnecken und der Behälter doppelwandig sind und mit Wasser aus dem Kühler gekühlt werden.

6. Verfahren nach Anspruch 5) **dadurch gekennzeichnet, dass** die Abgase aus der Verbrennung für die Dampferzeugung genutzt werden.

7. Verfahren nach Anspruch 6) **dadurch gekennzeichnet, dass** das Wasser mit einer Hochdruckpumpe in den Dampferzeuger gedrückt wird und daher bei Austritt des Dampfes in den Pyrolyse - Reaktor *Flashdampf* entsteht.

8. Verfahren nach Anspruch 7) **dadurch gekennzeichnet, dass** die Verbrennungsluft durch die heissen Abgase aus der Verbrennung vorgewärmt wird.

9. Verfahren nach Anspruch 8) **dadurch gekennzeichnet, dass** durch die Vergasung ohne Luft und nur mit überhitztem *Flashdampf* ein hoher Heizwert des Synthesegases erreicht wird.
